(19)

Europäisches
Patentamt

European
Patent Office

Office européen
des brevets

(11)  **EP 4 567 204 A1**

(12)  **EUROPEAN PATENT APPLICATION**
published in accordance with Art. 153(4) EPC

(43) Date of publication:
**11.06.2025 Bulletin 2025/24**

(21) Application number: **23922940.4**

(22) Date of filing: **19.12.2023**

(51) International Patent Classification (IPC):
**E02F 9/22** (2006.01)      **E02F 9/20** (2006.01)

(52) Cooperative Patent Classification (CPC):
**E02F 9/20; E02F 9/22**

(86) International application number:
**PCT/JP2023/045569**

(87) International publication number:
**WO 2024/171607 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.02.2023 JP 2023020335**

(71) Applicant: **Hitachi Construction Machinery Co.,
Ltd.
Tokyo 110-0015 (JP)**

(72) Inventors:
• **SHIWAKU Koji
Tsuchiura-shi, Ibaraki 300-0013 (JP)**
• **MORIKI Hidekazu
Tsuchiura-shi, Ibaraki 300-0013 (JP)**
• **INADA Ryou
Tsuchiura-shi, Ibaraki 300-0013 (JP)**

(74) Representative: **Manitz Finsterwald
Patent- und Rechtsanwaltspartnerschaft mbB
Martin-Greif-Strasse 1
80336 München (DE)**

(54)  **WORK MACHINE**

(57)    With respect to a plurality of actuators that drive a plurality of construction elements, respectively, of a work machine, judgements are made whether there are overload states and judgements are also made whether there are stop states, and when among the plurality of actuators, any actuator in the overload state and the stop state is judged, the supply amount of hydraulic fluid to be supplied to the actuator selected based on a result of the judgement is corrected. By appropriately controlling operations of the actuators depending on a velocity of the work device and load states of the actuators, excavating operation can be performed more efficiently.

[FIG. 4]

## Description

Technical Field

The present invention relates to a work machine.

Background Art

Regarding a work machine, such as a hydraulic excavator, having a front work implement (work device), there has been proposed an assistance system that, in order to smoothly perform excavating operation of earth or the like by the front work implement while avoiding stop of the front work implement due to an overload during the excavating operation, controls the operation of each actuator depending on operation contents inputted by an operator (hereinafter called "excavation control"). As conventional technologies for excavation control, those disclosed in Patent Document 1 and Patent Document 2 are known, for example.

Disclosed in Patent Document 1 is a construction machine that performs excavation work by driving a boom, an arm, and a bucket. The construction machine has a boom angle sensor that senses an angle of the boom, an arm angle sensor that senses an angle of the arm, a bucket angle sensor that senses an angle of the bucket, a storage device that stores data on earth's characteristics of earth to be excavated, and a controller that controls excavating operation. The controller computes an excavation reaction force acting on the bucket from the earth, based on the sensed boom angle, the sensed arm angle, the sensed bucket angle, and the earth's characteristics stored in the storage device, judges whether the computed excavation reaction force is greater than an upper limit set beforehand, and determines whether the excavating operation should be modified.

Disclosed in Patent Document 2 is a backhoe work vehicle, which is provided with a first sensor that senses a vertical angle of a boom relative to a machine body and a second sensor that senses an angle of the arm relative to the boom, is provided with a computing section that computes the position of a tip of the arm or the bucket relative to the machine body, based on information from the first and second sensors, and is also provided with a generator that compares information from the computing section with information from a setting section and generates signals to operate individual actuators such that the tip of the arm or the bucket is allowed to move along a predetermined locus. The backhoe work vehicle is provided with an overload judging section that, based on the information from the computing section, judges an overload when the tip of the arm or the bucket has not moved over a set distance or longer within a set period of time.

Prior Art Document

Patent Documents

Patent Document 1: JP-2011-252338-A
Patent Document 2: JP-S61-146929-A

Summary of the Invention

Problem to be Solved by the Invention

In the conventional technology described in Patent Document 1 cited above, force (hereinafter called "excavation reaction force") that earth applies to the front work implement during excavating operation is acquired based on a ground depth and the earth's characteristics inputted beforehand, judgements are made whether there are overload states, depending on whether the excavation reaction force is greater than an upper limit (hereinafter, "the maximum excavating power") set beforehand, and a determination is made whether a modification is needed for the excavating operation, to control operations of actuators.

However, the maximum excavating power that a hydraulic excavator can generate varies according to variations in the posture of a work device, because the maximum excavating power depends on maximum thrusts of cylinders, geometric layouts (geometric structure and joint angles) of the work device, and the like. There is hence a case that a need for a modification to excavating operation may be determined despite the work device actually being able to still afford to generate power to the maximum excavating power, in a case where whether a modification to the excavating operation is needed is determined based on a maximum excavating force (upper limit) set beforehand as in Patent Document 1 cited above.

In the conventional technology described in Patent Document 2 cited above, in contrast, whether there are overload states are determined based on whether the tip of the bucket has moved over a set distance set beforehand or greater within a set period of time set beforehand, in other words, whether the tip of the bucket is in a stop state.

In work by a hydraulic excavator, a stop state of a front work implement, however, does not necessarily occur from only an overload by an excavation reaction force. In Patent Document 2 cited above, a need for a modification to excavating operation may hence be determined in a case where light excavation is performed at a velocity equal to or lower than a threshold or in a like case, for example, during precision land-leveling work or like work.

With the foregoing in view, the present invention has as an object thereof the provision of a work machine that can perform excavating operation more efficiently by appropriately controlling operations of actuators depending on the velocity of a work device and the load states of the actuators.

Means for Solving the Problem

The present application includes a plurality of types of means for solving the above-described problem. Described as an example thereof, it is a work machine including a work device including a plurality of construction elements, a plurality of actuators that respectively drive the plurality of construction elements of the work device, overload sensors that respectively sense overload states of the plurality of actuators, angle and velocity sensors that respectively sense operation angles and angular velocities of the plurality of construction elements of the work device, operation devices that operate the plurality of actuators, and a controller that controls supply amounts of hydraulic fluid to be supplied to the actuators, depending on operating amounts of the operation devices. The controller judges, based on sensing results of the overload sensors, whether there are overload states on the plurality of actuators, and based on sensing results of the angle and angular velocity sensors, whether there are stop states with respect to the plurality of actuators, and when among the plurality of actuators, any actuator in the overload state and the stop state is judged, corrects the supply amount of the hydraulic fluid to be supplied to the actuator selected based on a result of the judgement.

Advantages of the Invention

According to the present invention, excavating operation can be performed more efficiently by appropriately controlling operations of the actuators depending on a velocity of the work device and load states of the actuators.

Brief Description of the Drawings

FIG. 1 is a perspective view illustrating an appearance of a hydraulic excavator presented as an example of a work machine.
FIG. 2 is a functional block diagram illustrating processing functions of a controller along with related configurations.
FIG. 3 is a functional block diagram illustrating processing functions of an assistance section of the controller along with related configurations.
FIG. 4 is a flowchart illustrating processing details by the controller.
FIG. 5 is a diagram describing the fundamental concept of computation of a command flow rate by correction of an operation flow rate.
FIG. 6 is a diagram describing an example of a determination method of an assistance direction in a case where a single actuator satisfies conditions A.
FIG. 7 is a diagram describing another example of the determination method of the assistance direction in the case where the single actuator satisfies the conditions A.
FIG. 8 is a diagram describing a further example of the determination method of the assistance direction in the case where the single actuator satisfies the conditions A.
FIG. 9 is a diagram describing an example of a determination method of an assistance direction in a case where a plurality of actuators satisfy the conditions A.
FIG. 10 is a diagram describing another example of the determination method of the assistance direction in the case where the plurality of actuators satisfy the conditions A.
FIG. 11 is a diagram describing a further example of the determination method of the assistance direction in the case where the plurality of actuators satisfy the conditions A.
FIG. 12 is a diagram describing a still further example of the determination method of the assistance direction in the case where the plurality of actuators satisfy the conditions A.
FIG. 13 is a functional block diagram illustrating processing functions of an assistance section of a controller according to a second embodiment along with related configurations.
FIG. 14 is a diagram illustrating an example of a norm computation table specifying the relation between elapsed time and norm in a case where an arm cylinder has satisfied the conditions A.

FIG. 15 is a diagram illustrating states of a target velocity vector of a claw tip of a bucket after correction of operation flow rates in a case where the norm computation table is applied.

Modes for Carrying Out the Invention

Embodiments of the present invention will hereinafter be described with reference to drawings. It is to be noted that, in these embodiments, a description will be made by illustrating a hydraulic excavator as an example of a work machine including a front work implement (work device), but the present invention can also be applied to other work machines having a front work implement.

Further, an alphabet letter may be added to the end of a reference character (numeral) in the following description in a case where there are a plurality of elements that are the same, but the plurality of elements may also be written together with omission of the alphabet character. Specifically, when there are three angle and angular velocity sensors 20a, 20b, and 20c, for example, they may collectively be referred to as the angle and angular velocity sensors 20. In addition, illustration may be omitted for simplification regarding each signal line or the like the connection relation of which is evident from the description.

<First Embodiment>

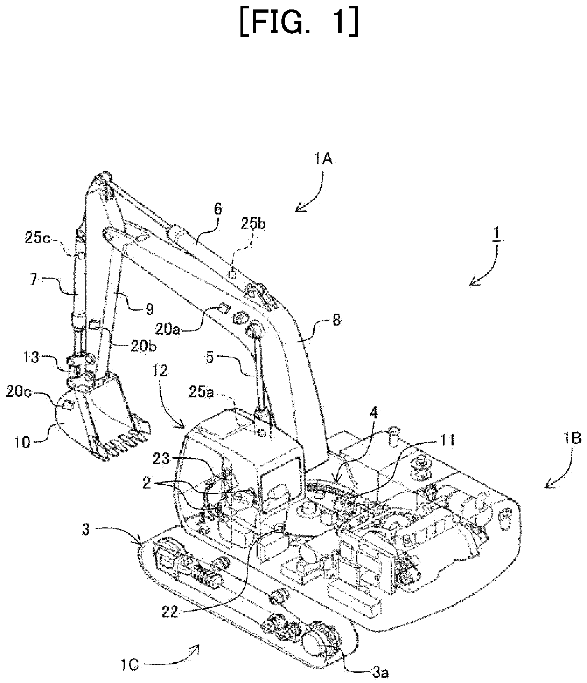

A first embodiment of the present invention will be described with reference to FIGS. 1 through 12.

FIG. 1 is a perspective view illustrating an appearance of a hydraulic excavator presented as an example of a work machine in this embodiment.

In FIG. 1, a hydraulic excavator 1 includes a lower track structure 1C, an upper swing structure 1B pivotally mounted on the lower track structure 1C via a swing device 4 and configuring a machine body together with the lower track structure 1C, and a front work implement 1A attached to a front portion of the upper swing structure 1B and configuring a work device.

The front work implement 1A is mainly configured by a boom 8 as a construction element attached pivotally in an up-down direction to the front portion of the upper swing structure 1B, an arm 9 as a construction element attached pivotally in the up-down direction to a tip (succeeding stage) of the boom 8, a bucket 10 as a construction element attached pivotally in the up-down direction to a tip (succeeding stage) of the arm 9, a bucket link 13 pivotally attached to the arm 9 and the bucket 10, a boom cylinder 5 that is connected to the upper swing structure 1B and the boom 8 and changes the pivot angle of the boom 8 with respect to the upper swing structure 1B by driving the boom 8 in the up-down direction relative to the upper swing structure 1B, an arm cylinder 6 that is connected to the boom 8 and the arm 9 and changes the pivot angle of the arm 9 with respect to the boom 8 by driving the arm 9 in the up-down direction relative to the boom 8, and a bucket cylinder 7 that is connected to the arm 9 and the bucket link 13 and changes the pivot angle of the bucket 10 with respect to the arm 9 via the bucket link 13. The front work implement 1A has such configurations that the arm 9 is disposed on a preceding stage of the bucket 10 as the construction element and the boom 8 is disposed on a preceding stage of the arm 9.

The lower track structure 1C includes left and right track devices 3 of the crawler type (the left track device 3 alone is illustrated in FIG. 1), and the left and right track devices 3 are driven by left and right track motors 3a (the left track motor 3a alone is illustrated in FIG. 1) and can move the hydraulic excavator 1 to a desired location.

The swing device 4 includes a swing motor 11 that changes the pivot angle of the upper swing structure 1B with respect to the lower track structure 1C.

On the front portion of the upper swing structure 1B and beside the front work implement 1A, a cabin 12 that forms an operator's cab is arranged. On a rear side of an operator's seat, in which an operator sits, in the cabin 12, a controller 22 that controls the entirety of operations of the hydraulic excavator 1 is arranged. Further, operation devices 2 that generate operation signals to give an instruction on operations (velocities and directions) of the boom 8, the arm 9, the bucket 10, and the upper swing structure 1B by operator's operation are arranged left and right in a front space of the operator's seat in the cabin 12. It is to be noted that, on a front side of the operator's seat, a further operation device that generates operation signals to give an instruction on operations (speeds and directions) of the left and right track devices 3 is also arranged.

The boom 8, the arm 9, and the bucket 10 are provided with a boom angle and angular velocity sensor 20a, an arm angle and angular velocity sensor 20b, and a bucket angle and angular velocity sensor 20c, respectively, to sense their angles (operation angles) with respect to a horizontal plane and their angular velocities by operations. It is to be noted that the bucket angle and angular velocity sensor 20c may be one arranged on the bucket link 13 instead of the bucket 10. The boom angle and angular velocity sensor 20a, the arm angle and angular velocity sensor 20b, and the bucket angle and angular velocity sensor 20c may hereinafter collectively be called the "angle and angular velocity sensors 20."

The angle and angular velocity sensors 20 are, for example, IMUs (Inertial Measurement Units). As the angle and angular velocity sensors 20, however, it is sufficient if angles and angular velocities can be measured and computed. Use can be made, for example, of devices that directly measure angles and angular velocities like gyro potentiometers, devices that subject measured angular velocities to numerical differentiation and integral operation, or a combined configuration thereof.

The boom cylinder 5 is provided with a pressure sensor 25a that senses a pressure on a bottom side (bottom pressure) and a pressure on a rod side (rod pressure) of the boom cylinder 5. Further, the arm cylinder 6 is provided with a pressure sensor 25b that senses a pressure on a bottom side (bottom pressure) and a pressure on a rod side (rod pressure) of the arm cylinder 6. Similarly, the bucket cylinder 7 is provided with a pressure sensor 25c that senses a pressure on a bottom side (bottom pressure) and a pressure on a rod side (rod pressure) of the bucket cylinder 7.

The pressure sensors 25a, 25b, and 25c configure, together with a functional section (not illustrated) disposed in the controller 22, a boom overload sensor 61a, an arm overload sensor 61b, and a bucket overload sensor 61c, which respectively sense overload states of the boom cylinder 5, the arm cylinder 6, and the bucket cylinder 7, from thrusts of the boom cylinder 5, the arm cylinder 6, and the bucket cylinder 7 and pressure resistance specifications as device performances of these cylinders, or limit values (pressure) for hydraulic circuits that drive these cylinders. The boom overload sensor 61a, the arm overload sensor 61b, and the bucket overload sensor 61c may hereinafter collectively be called "overload sensors 61."

Judgements of overload states of the boom cylinder 5, the arm cylinder 6, and the bucket cylinder 7 by the overload sensors 61 are performed based on the below-described (Formula 1) and (Formula 2), and they are judged to be in overload states when the below-described (Formula 1) or (Formula 2) is satisfied.

$$P_{i\_btm} \geq P_{sat\_i} \ \ldots \ (\text{Formula 1})$$

$$P_{i\_rod} \geq P_{sat\_i} \ \ldots \ (\text{Formula 2})$$

In the above-described (Formula 1) and (Formula 2), $P_{i\_btm}$ and $P_{i\_rod}$ represent measured pressures by the pressure sensors 25, $P_{sat\_i}$ denotes a pressure specification, and i indicates which of the boom cylinder 5, the arm cylinder 6, or the bucket cylinder 7 is targeted, respectively. In a case where $P_{bm\_btm} \geq P_{sat\_bm}$ (see the above-described (Formula 1)) or $P_{bm\_rod} \geq P_{sat\_bm}$ (see the above-described (Formula 2)) is satisfied, for example, the bottom side of the boom cylinder 5 is judged to be in an overload state. It is to be noted that, as the pressure resistance specification to be used in computation at the overload sensors 61, lower one of the pressure resistance specification or a relief-valve set pressure as a limit value for the hydraulic circuit may be used in a case where a relief valve (what is generally called an overload relief valve) connected to the bottom side or the rod side in the configuration of the hydraulic circuit is disposed.

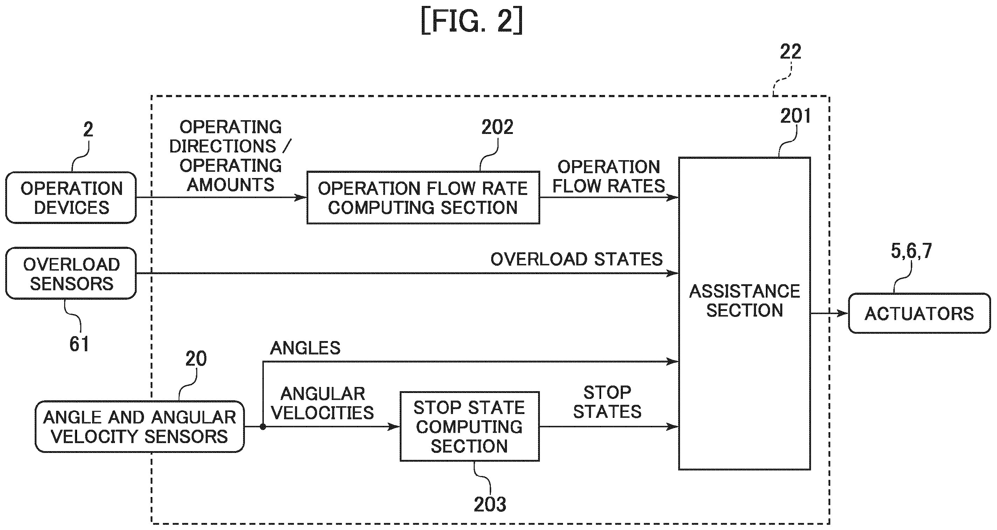

FIG. 2 is a functional block diagram illustrating processing functions of the controller along with related configurations.

In FIG. 2, the controller 22 has an operation flow rate computing section 202 that computes operation flow rates, which are supply rates of hydraulic fluid to be supplied to the boom cylinder 5, the arm cylinder 6, and the bucket cylinder 7, based on operation states (operating directions and operating amounts) of the operation devices 2, a stop state computing section 203 that based on angular velocities sensed at the angle and angular velocity sensors 20, judges whether individual construction elements, such as the boom 8, the arm 9, and the bucket 10 operated by the boom cylinder 5, the arm cylinder 6, and the bucket cylinder 7 (which may hereinafter collectively be called the" actuators"), and construction elements on their preceding stages (for example, the boom 8 relative to the arm 9) are in stop states, and an assistance section 201 that, based on the operation flow rates from the operation flow rate computing section 202, overload states (information indicating whether there are overload states) from the overload sensors 61, angles from the angle and angular velocity sensors 20, and stop states (information indicating whether there are stop states) from the stop state computing section 203, computes and outputs command flow rates for and to the actuators 5, 6, and 7.

It is to be noted that the operation flow rates computed at the operation flow rate computing section 202 are only required to include information on the operation flow rates, and may give an instruction on the operation flow rates, for example, from an external discrete system such as a remote operation device or an automated system on a server.

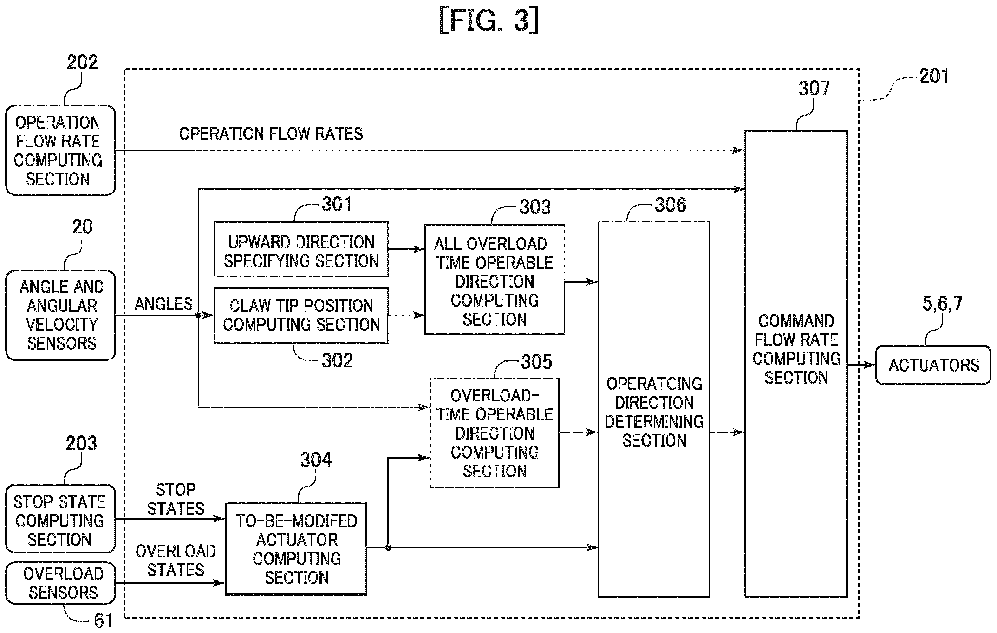

FIG. 3 is a functional block diagram illustrating processing functions of the assistance section of the controller along with related configurations.

In FIG. 3, the assistance section 201 has an upward direction specifying section 301, a claw tip position computing section 302, an all overload-time operable direction computing section 303, a to-be-modified actuator computing section 304, an overload-time operable direction computing section 305, an operating direction determining section 306, and a command flow rate computing section 307.

The upward direction specifying section 301 specifies an opposite direction of the gravity vector (a vertically upward direction), for example, by an advance input at the operating device 2. It is to be noted that, instead of the advance input at the operating device 2, a configuration may be made, for example, such that a direction, which corresponds to an upper side of the upper swing structure 1B is specified, by arranging an inertial measurement unit (IMU) on the upper swing structure 1B and performing an automated input based on its sensing result.

The claw tip position computing section 302 computes position coordinates of the claw tip of the bucket 10 in a machine body coordinate system, based on sensing results (angles) from the angle and angular velocity sensors 20.

The all overload-time operable direction computing section 303 computes an all overload-time target velocity vector, which indicates the target direction and the target velocity of movement of the claw tip of the bucket 10 at an all overload time, based on specified details (vertically upward direction) from the upward direction specifying section 301 and computation results (the coordinates of the claw tip) from the claw tip position computing section 302.

The to-be-modified actuator computing section 304 judges one or more of the actuators 5, 6, and 7 for which the supply amount of hydraulic fluid is to be corrected by modifying the operation flow rate based on computation results (information indicating whether the construction elements and the construction elements on their preceding stages are in stop states) from the stop state computing section 203 and sensing results (information indicating whether there are overloads) from the overload sensors 61.

The overload-time operable direction computing section 305 computes an overload-time target velocity vector, which indicates the target direction and the target velocity of movement of the claw tip of the bucket 10 at an overload time, based on sensing results (angles) from the angle and angular velocity sensors 20 and computation results (information on any actuator to be modified) from the to-be-modified actuator computing section 304.

The operating direction determining section 306 computes a target velocity vector of the claw tip of the bucket 10, based on a computation result (all overload-time target velocity vector) from the all overload-time operable direction computing section 303, a computation result (overload-time target velocity vector) from the overload-time operable direction computing section 305, and a computation result (information on any actuator to be modified) from the to-be-modified actuator computing section.

The command flow rate computing section 307 computes and determines command flow rates for the actuators 5, 6, and 7, based on the computation result (target velocity vector) from the operating direction determining section 306, computation results (operation flow rates) from the operation flow rate computing section 202, and sensing results (angles) from the angle and angular velocity sensors 20, and outputs the command flow rates to the actuators 5, 6, and 7. Specifically, the command flow rates are computed by applying a Jacobian matrix or the like to the target velocity vector of the claw tip of the bucket 10 from the operating direction determining section 306 and transforming it to target velocities of the cylinders.

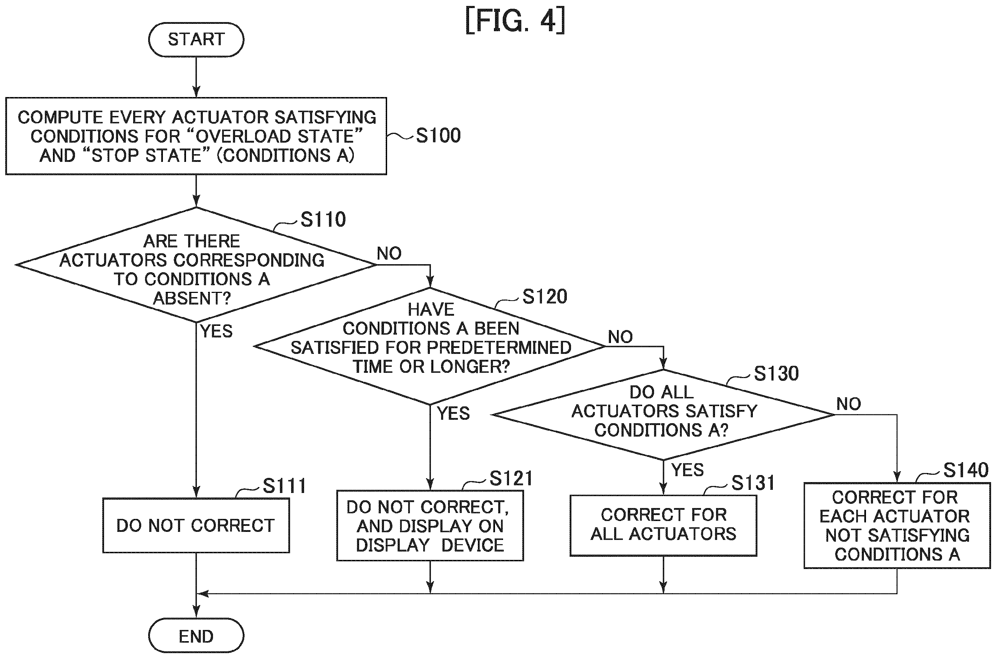

FIG. 4 is a flowchart illustrating processing details by the controller.

In FIG. 4, the controller 22 first computes actuators satisfying conditions (conditions A) representing that the respective actuators 5, 6, and 7 are in overload states and the construction elements (the boom 8, the arm 9, the bucket 10) corresponding to the individual actuators 5, 6, and 7 are in stop states (Step S100).

Subsequently, judgements are made whether actuators satisfying the conditions A are absent (Step S110), and if the judgement results are YES, in other words, if all the actuators (boom cylinder 5, arm cylinder 6, and bucket cylinder 7) do not satisfy the conditions A, computation results (operation flow rates) of the operation flow rate computing section 202 are outputted as command flow rates to the actuators 5, 6, and 7 without being corrected (Step S111), and the processing is ended. In the processing in Step 110, it is assured to improve the efficiency of the processing by performing no correction of the operation flow rates if an actuator satisfying the conditions A is absent (see Step S111).

On the other hand, if the judgement results in Step S110 are NO, in other words, if judged that there is any actuator satisfying the conditions A, a judgement is made whether the actuator judged to satisfy the conditions A has continuously satisfied the conditions A for a time set beforehand (predetermined time) or longer (in other words, whether the predetermined time or longer has elapsed from the time when the actuator satisfied the conditions A) (Step S120). The processing of Step S120 is performed to assure improvements in the processing by interrupting the correction to the operation flow rate and giving a notification (presenting a display) to the operator to urge the operator to confirm the current situation and to make a response action, because the state of the actuator is not improvable even by the correction of the flow rate.

If the judgement results in Step S120 are YES, that is, if judged that the conditions A have continuously been satisfied for the predetermined time or longer (in other words, the predetermined time has elapsed from the time when the actuator satisfied the conditions A), the computation results (operation flow rates) of the operation flow rate computing section 202 are outputted to the actuators 5, 6, and 7 without being corrected, and at the same time, a notification is given to the operator by displaying on a display device 23 to the effect that the correction of the operation flow rates is interrupted (Step S121), and the processing is ended. It is to be noted that a subsequent return to the processing in Step S100 after the interruption of the processing in Step S121 is considered to use, as a trigger, that all the operation flow rates are once allowed to decrease to zero (0) (bringing the operation devices to neutral), lifting lock levers, making a key-off, or the like.

On the other hand, if the judgement result in Step S120 is NO, that is, if judged that any actuator satisfying the conditions A has not satisfied the conditions A for the predetermined time or longer (in other words, the predetermined time has not elapsed from the time when any actuator satisfied the conditions A), judgements are made whether all the actuators satisfy the conditions A (Step S130).

If the judgement results are YES in Step S130, in other words, if all the actuators have been judged to satisfy the conditions A, all the actuators are selected as those for which the operation flow rates are to be corrected, command flow rates, as corrected operation flow rates of all the actuators, are computed and outputted to the actuators 5, 6, and 7 (Step S131), and the processing is ended. If the judgement results in Step S130 are NO, on the other hand, the process proceeds to Step S140 as will be mentioned below, in which each actuator that does not satisfy the conditions A is selected as a correction target actuator, a correction of the operation flow rate of the actuator is performed, and the processing is ended.

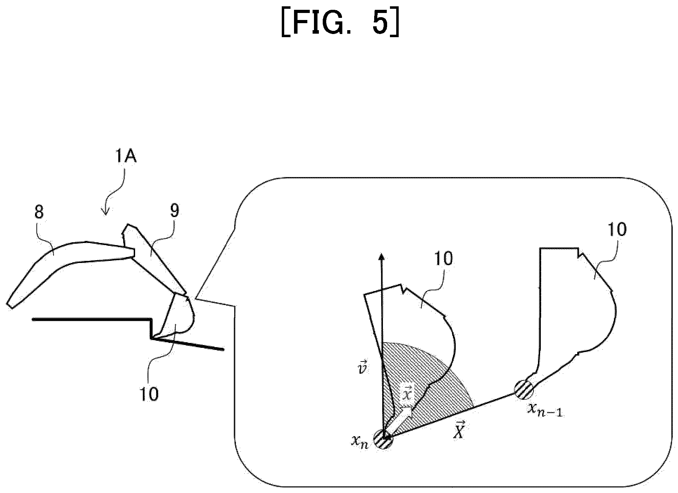

FIG. 5 is a diagram describing the fundamental concept of computation of a command flow rate by correction of an operation flow rate.

In FIG. 5, the position x of the claw tip of the bucket 10 at a given time n is indicated by a claw tip position $x_n$, the position x of the claw tip of the bucket 10 at a time n-1 before reaching the claw tip position $x_n$ by a claw tip position $x_{n-1}$, the direction in which the claw tip of the bucket 10 has already passed at the time n by a vector $X = x_{n-1} - x_n$, and the vertically upward direction specified at the upward direction specifying section 301 by a vector v. It is to be noted that the suffix n in the claw tip positions $x_n$ and $x_{n-1}$ defines a variable representing time steps of the controller 22, and varies like ..., n-1, n, n+1, ... (n: positive integer), but is only required to allow referring to a past tip position x, and may retroactively go back, for example, by a predetermined time or distance.

As illustrated in FIG. 5, in Step S131 of FIG. 4, the operation flow rates of the boom cylinder 5, the arm cylinder 6, and the bucket cylinder 7 are corrected to compute command flow rates, for example, such that the advancing direction (vector x) of the claw tip position $x_n$ of the bucket 10 falls between an opposite direction (a direction that is directed toward the position already passed and extends in an opposite direction along the vector X) and the vertically upward direction (vector v) specified at the upward direction specifying section 301 (specifically a range indicated by diagonal lines in FIG. 5). Specifically, the computation of the command flow rates by the correction of the operation flow rates is intended, as one of its purposes, to operate the front work implement 1A such that the loads on the respective actuators 5, 6, and 7 decrease (overload states are eliminated), and the command flow rates are computed (in other words, the operation flow rates are corrected) such that the moving direction of the point of action of force from the front work implement 1A on an excavation target such as the ground (here, the claw tip position of the bucket 10) is a direction where excavation has been conducted and no earth exists, specifically falls in the range indicated by the diagonal lines in FIG. 5. It is to be noted that, focusing on the existence of a definite correlation between an excavation load and an excavation depth, the operation flow rates of the respective actuators 5, 6, and 7 may be corrected to compute command flow rates such that the moving direction of the claw tip position of the bucket 10 becomes a direction to make the excavation depth shallower, in other words, becomes a direction between the vertical direction to the ground surface of the excavation target and the vertically upward direction.

If the judgement results in Step S130 of FIG. 4 are NO, in other words, if there is any actuator not satisfying the conditions A, with respect to each actuator not satisfying the conditions A, the operation flow rate is corrected to compute a command flow rate, the command flow rate is outputted to the actuator 5, 6, or 7 (Step S140), and the processing is ended. Specifically, if there is any actuator not satisfying the conditions A, in other words, if at least one of the boom cylinder 5, the arm cylinder 6, and the bucket cylinder 7 does not satisfy the conditions A, with respect to each of the remaining actuator or actuators satisfying the conditions A, the operation flow rate as the computation result at the operation flow rate computing section 202 is outputted as a command flow rate to the actuator. With respect to the actuator or actuators not satisfying the conditions A, in contrast, the operation flow rate of the actuator or actuators not satisfying the conditions A is corrected to compute a command flow rate such that the advancing direction of the claw tip position of the bucket by the actuator or actuators not satisfying the conditions A becomes a direction perpendicular to the advancing direction of the claw tip position by the remaining actuator or actuators satisfying the conditions, and the command flow rate is outputted to the actuator or actuators not satisfying the conditions A.

Here, a description will be made in detail regarding the processing in Step S140 of FIG. 4, specifically a determination method of the moving direction (assistance direction) of the claw tip position of the bucket 10 in the computation of the command flow rate or rates by the correction of the operation flow rate or rates. Taking into consideration the front work implement 1A exemplified in this embodiment, there are believed to exist, as states that are assumable in Step S140, a case where a plurality of (two) actuators satisfy the conditions A and another case where a single (one) actuator satisfies the conditions A.

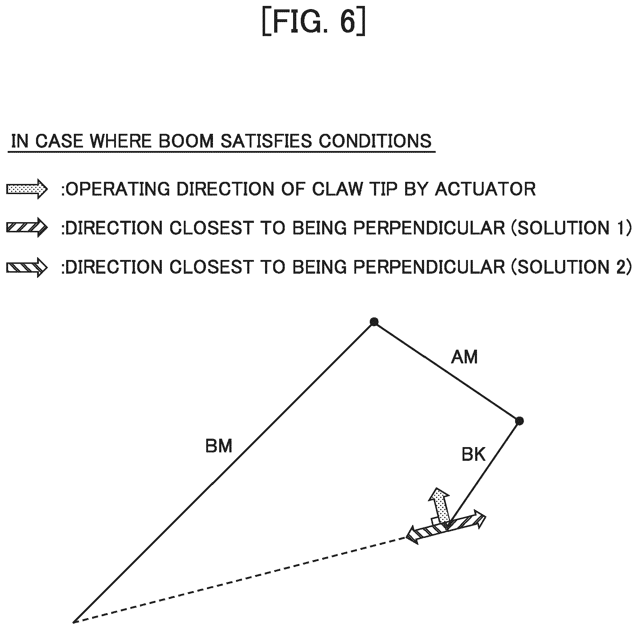

FIGS. 6 through 8 are diagrams describing examples of a determination method of an assistance direction in the case where a single actuator satisfies the conditions A and exemplify a case where a boom cylinder alone satisfies the conditions A. "BM," "AM," and "BK" in FIGS. 6 through 8 represent, in short, the boom 8, the arm 9, and the bucket 10.

The motion of the claw tip of the bucket 10 by an actuator in the front work implement 1A is motion rotated about an axis by the actuator. In the case where a single actuator satisfies the conditions A as illustrated in FIG. 6, the target velocity vector of the claw tip of the bucket 10 by the actuator that satisfies the conditions A is a vector connecting an axis of rotation, which is on a preceding side of the construction element operated by the actuator satisfying the conditions A (a proximal end side of the boom 8 in the case of the boom 8) and the claw tip of the bucket 10.

In this case, assistance is provided by the remaining actuators which do not satisfy the conditions A, such that the claw tip of the bucket 10 is moved in a direction closest to being perpendicular with respect to the target velocity vector of the claw tip of the bucket 10 by the actuator that satisfies the conditions A.

If the boom cylinder 5 alone satisfies the conditions A as illustrated in FIG. 6, two solutions exist as the direction closest to being perpendicular, one being a +90 (deg) direction, the other a -90 (deg) direction, with respect to the above-mentioned vector (see FIG. 6). As to which one of these two solutions is selected, there are, for example, two selection methods as will be described hereinafter.

As the first selection method (hereinafter called "Selection Method 1"), a possible case is one where a selection is made in such a manner as to intervene in a predetermined direction. In this case, setting is made beforehand which one of +90 (deg) or -90 (deg) is to be selected for each of the actuators (the boom 8, the arm 9, the bucket 10) satisfying the conditions A.

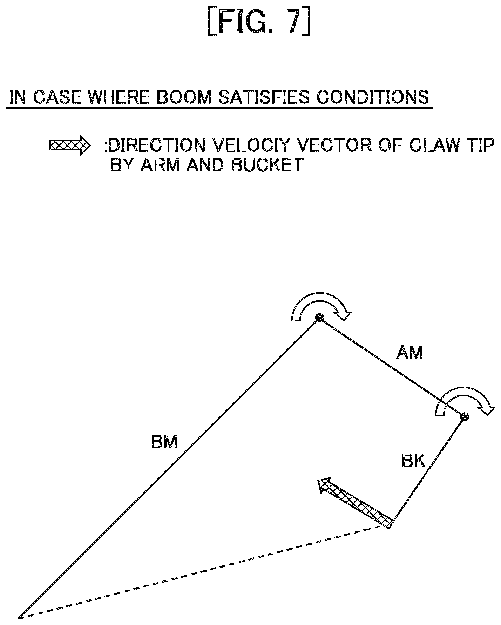

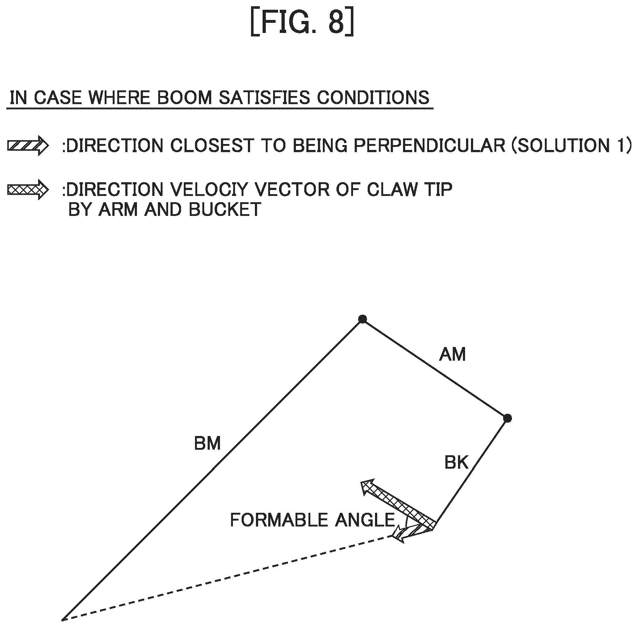

As the second selection method (hereinafter called "Selection Method 2"), a possible case is one where a selection is made in such a manner as to conform to the current operating direction. In this case, for example, when the boom cylinder 5 has satisfied the conditions A, the angular velocities of the arm 9 and the bucket 10, which are to be intervened, are measured, a direction velocity vector of the claw tip by the angular velocities of the arm 9 and the bucket 10 is computed (see FIG. 7), and one of the two solutions, the one solution being smaller in the angle formed with the direction velocity vector of the claw tip, is selected (see FIG. 8). By selecting the intervening direction in accordance with Selection Method 2, changes to the current operation are reduced, enabling assistance to be performed with not much discomfort to the operator.

It is to be noted that Selection Method 1 and Selection Method 2 can also similarly be applied in a case where the single actuator satisfying the conditions A is the arm 9 or the bucket 10.

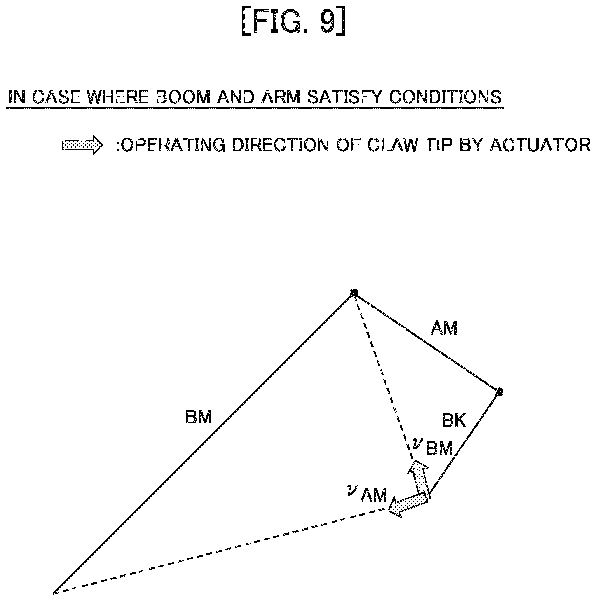

FIGS. 9 through 12 are diagrams describing examples of a determination method of an assistance direction in a case where a plurality of actuators satisfy the conditions A and exemplify a case where the boom cylinder and the arm cylinder satisfy the conditions A. "BM," "AM," and "BK" in FIGS. 9 through 12 represent, in short, the boom 8, the arm 9, and the bucket 10.

In the case where a plurality of actuators satisfy the conditions A as illustrated in FIG. 9, the target velocity vector of the claw tip of the bucket 10 by the actuators satisfying the conditions A is determined with respect to each of the actuators satisfying the conditions A.

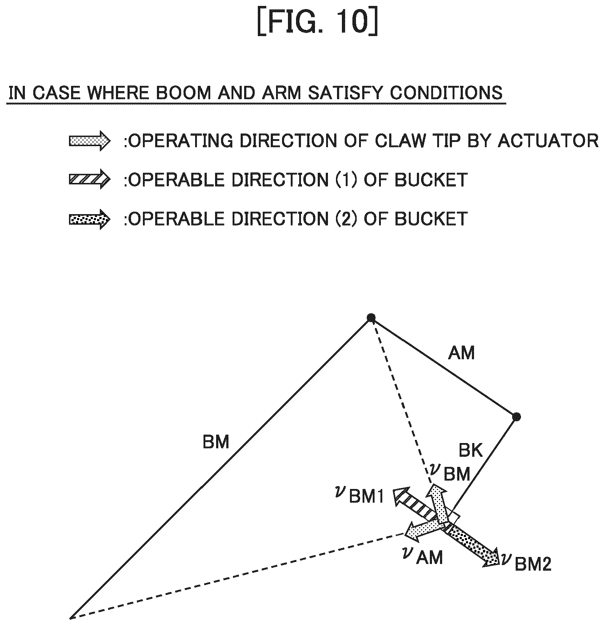

Specifically, as illustrated in FIGS. 9 and 10, there are two operating directions, that is, an operating direction $v_{BM}$ by the boom cylinder 5 and another operating direction $v_{AM}$ by the arm cylinder 6, and assistance is performed by the remaining actuator, which does not satisfy the conditions A, such that the claw tip of the bucket 10 is moved in a direction in which the sum of angles formed between the respective ones of those two vectors and a velocity vector with which the claw tip is operable by the remaining actuator (here, the bucket cylinder 7) is minimum.

If the boom cylinder 5 and the arm cylinder 6 satisfy the conditions A, there are, as the velocity vector with which the claw tip is operable by the bucket cylinder 7, two vectors, that is, a vector $v_{BK1}$ in a positive direction (Operable Direction (1)) and another vector $v_{BK2}$ in a negative direction (Operable Direction (2)) (see FIG. 10).

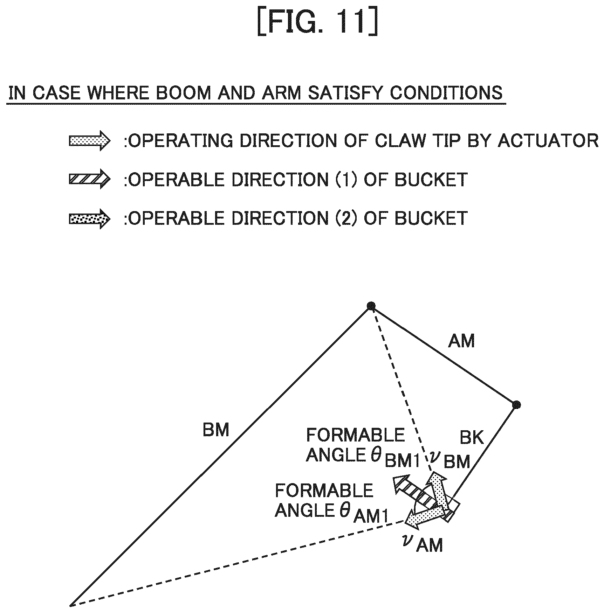

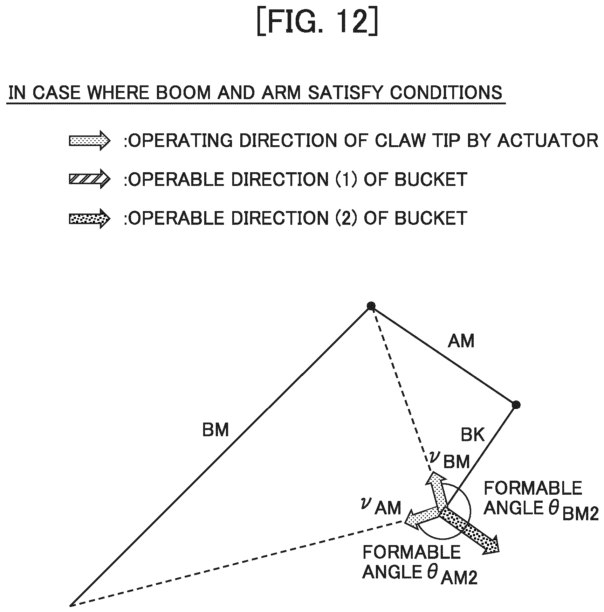

As illustrated in FIGS. 11 and 12, there are $\theta_{BM1}$, $\theta_{BM2}$, $\theta_{AM1}$, and $\theta_{AM2}$ as angles formable by the individual vectors, and these formed angles are determined by the following (Formula 3) to (Formula 6) using functions f which are determined by the definition of inner product of vectors and the law of cosines.

$$\theta_{BM1} = f(v_{BK1}, V_{BM}) \quad \text{(Formula 3)}$$

$$\theta_{BM2} = f(v_{BK2}, V_{BM}) \quad \text{(Formula 4)}$$

$$\theta_{AM1} = f(v_{BK1}, V_{AM}) \quad \text{(Formula 5)}$$

$$\theta_{AM2} = f(v_{BK2}, V_{AM}) \quad \text{(Formula 6)}$$

An assistance operation is performed by setting a target velocity vector depending on the relation of the respective angles.

Specifically, the vector $v_{BK1}$ is set as the target velocity vector when the following (Formula 7) is satisfied.

$$\theta_{BM1} + \theta_{AM1} < \theta_{BM2} + \theta_{AM2} \quad \text{(Formula 7)}$$

Meanwhile, the vector $V_{BK2}$ is set as the target velocity vector when the following (Formula 8) is satisfied.

$$\theta_{BM1} + \theta_{AM1} > \theta_{BM2} + \theta_{AM2} \quad \text{(Formula 8)}$$

It is to be noted that, when the following (Formula 9) is satisfied, setting is made beforehand as to which one of the vector $v_{BK1}$ and vector $v_{BK2}$ is to be set as a target velocity vector, and the vector so set is set as the target velocity vector.

$$\theta_{BM1} + \theta_{AM1} = \theta_{BM2} + \theta_{AM2} \quad \ldots \quad \text{(Formula 9)}$$

It is to be noted that the above-described setting method of a target velocity vector can also similarly be applied in a case where the actuators satisfying the conditions A are the boom 8 and the bucket 10, or are the arm 9 and the bucket 10.

In this embodiment configured as described above, by appropriately identifying stop states caused by overload states of the front working implement (work device) 1A based on the sensing results of the angle and angular velocity sensors 20, a judgement can appropriately be made as to whether modifications are needed, and also by correcting the operation flow rate of each actuator different from the actuator or actuators in the overload state and the stop state, elimination of the overload state can be assured while the excavating force is maintained as much as possible, so that the excavating operation can be performed more efficiently.

<Second Embodiment>

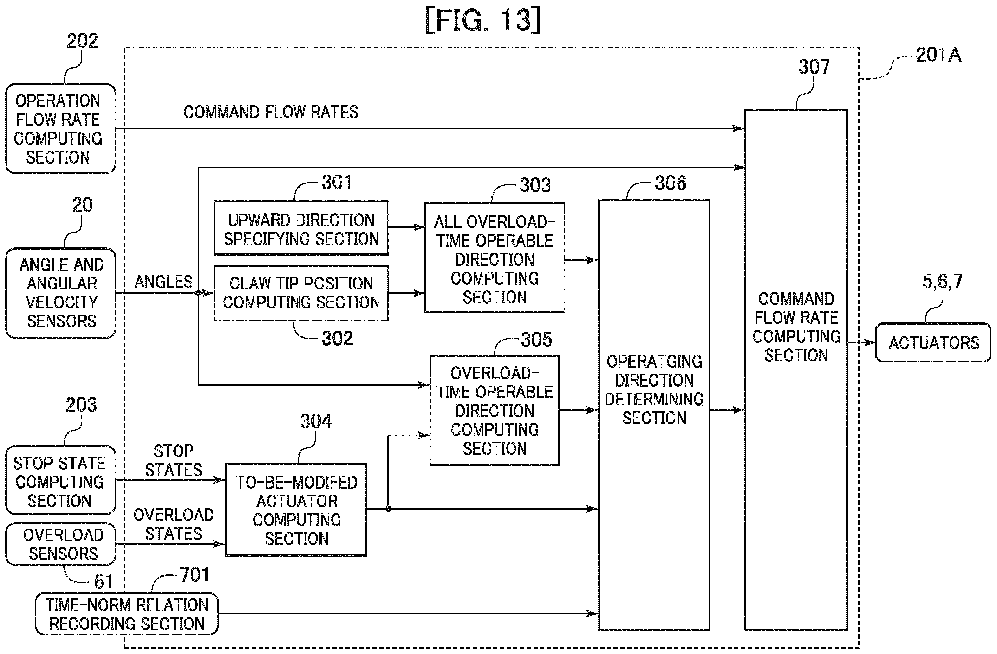

A second embodiment of the present invention will be described with reference to FIGS. 13 through 16. It is to be noted that, in this embodiment, members similar to those in the first embodiment are described using the same reference characters, and their description is omitted as appropriate.

FIG. 13 is a functional block diagram illustrating processing functions of an assistance section of a controller according to this embodiment along with related configurations.

In FIG. 13, an assistance section 201A has the upward direction specifying section 301, the claw tip position computing section 302, the all overload-time operable direction computing section 303, the to-be-modified actuator computing section 304, the overload-time operable direction computing section 305, a time-norm relation recording section 701, an operating direction determining section 306A, and the command flow rate computing section 307.

The upward direction specifying section 301 specifies an opposite direction of the gravity vector (a vertically upward direction), for example, by advance inputs at the operating devices 2. It is to be noted that, instead of the advance inputs at the operating devices 2, a configuration may be made such that a direction, which corresponds to an upper side of the upper swing structure 1B is specified, for example, by arranging an inertial measurement unit (IMU) on the upper swing structure 1B and performing an automated input based on its sensing result.

The claw tip position computing section 302 computes position coordinates of the claw tip of the bucket 10 in a machine body coordinate system, based on sensing results (angles) from the angle and angular velocity sensors 20.

The all overload-time operable direction computing section 303 computes an all overload-time target velocity vector, which indicates the target direction and the target velocity of movement of the claw tip of the bucket 10 at an all overload time, based on specified details (vertically upward direction) from the upward direction specifying section 301 and computation results (the coordinates of the claw tip) from the claw tip position computing section 302.

The to-be-modified actuator computing section 304 judges one or more of the actuators 5, 6, and 7 for which the operation flow rate is to be corrected, based on computation results (information indicating whether there are stop states) from the stop state computing section 203 and sensing results (information indicating whether there are overloads) from the overload sensors 61.

The overload-time operable direction computing section 305 computes an overload-time target velocity vector, which indicates the target direction and the target velocity of movement of the claw tip of the bucket 10 at an overload time, based on sensing results (angles) from the angle and angular velocity sensors 20 and computation results (information on any actuator to be modified in operation flow rate) from the to-be-modified actuator computing section 304.

The time-norm relation recording section 701 has a record of a norm computation table specifying beforehand the relation between the elapsed time from satisfaction of the conditions for overload state and stop state (the conditions A) and the norm (magnitude) of the target velocity vector of the claw tip of the bucket 10.

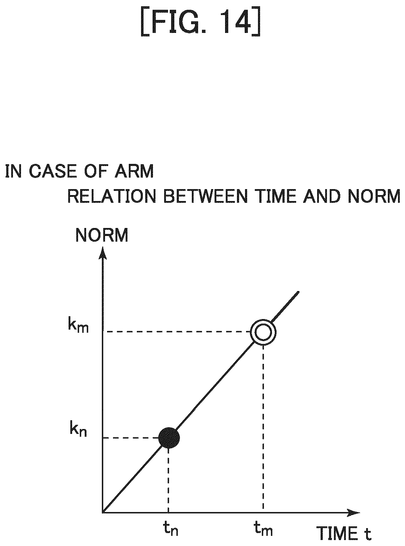

FIG. 14 is a diagram illustrating an example of the norm computation table specifying the relation between elapsed time and norm in a case where the arm cylinder has satisfied the conditions A.

In the norm computation table, it is set such that, as illustrated in FIG. 14, the norm of the target velocity vector of the claw tip of the bucket 10 increases as the elapsed time (t) from satisfaction of the conditions A increases. For example, the norm of the target velocity vector is assumed to be $k_n$ at time $t_n$. When the elapsed time has increased to time $t_m$, the norm of the targe velocity vector also increases to be $k_m$. It is to be noted that, in FIG. 14, the case where the norm of the target velocity increases in proportion to increases in elapsed time is exemplified, but the norm computation table is only required to be set such that the norm of a target velocity increases with the increase in the elapsed time, and hence, a norm computation table representing a non-linear (non-proportional) curved relation may be set, for example.

The operating direction determining section 306A computes a target velocity vector of the claw tip of the bucket 10 based on a computation result (all overload-time target velocity vector) from the all overload-time operable direction computing section 303, a computation result (overload-time target velocity vector) from the overload-time operable direction computing section 305, a computation result (information on any actuator to be modified) from the to-be-modified actuator computing section, and the norm computation table in the time-norm relation recording section 701.

At the operating direction determining section 306A, a holding time from the time when each actuator judged to be a target to be modified at the to-be-modified actuator computing section 304 has been brought into an operation state (true state) is recorded, and based on the norm computation table, the norm of the target velocity vector of the claw tip of the bucket 10 is increased depending on the elapsed time. It is to be noted that the count of the holding time is reset in a case where the target actuator has been brought into a non-operation state (false state).

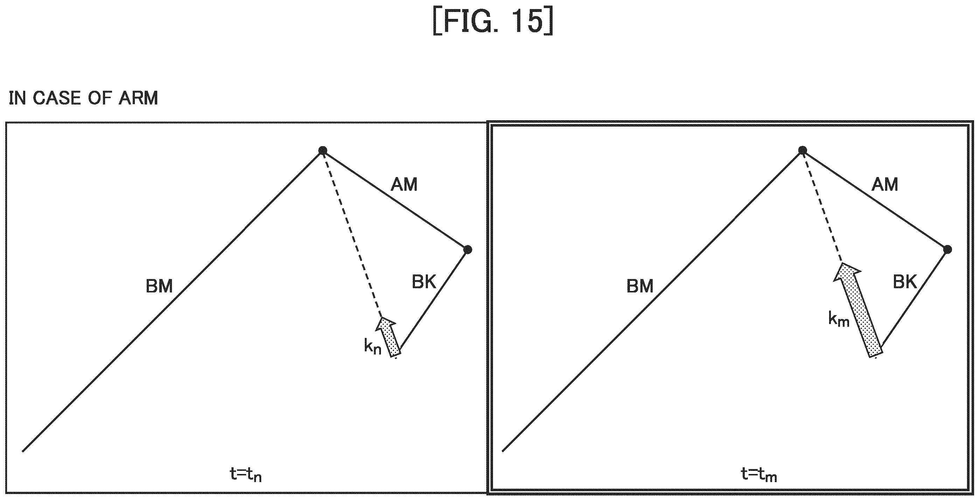

FIG. 15 is a diagram illustrating states of the target velocity vector of the claw tip of the bucket after corrections of operation flow rates in a case where the norm computation table is applied. "BM," "AM," and "BK" in FIG. 15 represent, in short, the boom 8, the arm 9, and the bucket 10.

As illustrated in FIG. 15, the target velocity vector is set such that the norm tm in the case of the elapsed time tm is greater than the norm kn in the case of the elapsed time tn. It can hence be said that the magnitude of the target velocity vector after the correction of the operation flow rate of each actuator increases depending on the elapsed time from the time when the actuator has come into the overload state and the stop state.

A command flow rate computing section 307A computes and determines command flow rates for the actuators 5, 6, and 7, based on the computation result (target velocity vector) from the operating direction determining section 306, computation results (operation flow rates) from the operation flow rate computing section 202, and sensing results (angles) from the angle and angular velocity sensors 20, and outputs the command flow rates to the actuators 5, 6, and 7. Specifically, the command flow rates are computed by applying a Jacobian matrix or the like to the target velocity vector of the claw tip of the bucket 10 from the operating direction determining section 306 and transforming it into target velocities of the cylinders.

The rest of the configurations is similar to those of the first embodiment.

In this embodiment configured as above, advantageous effects similar to those in the first embodiment can also be obtained.

In addition, the stop state of each construction element caused by an overload can be eliminated quicker, since a correction is performed such that the supply rate (operation flow rate) of hydraulic fluid to the actuator increases depending on the elapsed time from the satisfaction of the conditions A for the overload state and the stop state.

<Remarks>

It is to be noted that the present invention is not limited to the above-described embodiments, and various modifications and combinations within the scope not departing from the spirit of the present invention are embraced. Further, the present invention is not limited to those including all of the configurations described in the above-described embodiments, and those in which some of the configurations are deleted are also included. In addition, the above-described individual configurations, functions, and the like may be realized partly or wholly, for example, by designing an integrated circuit or the like. Moreover, the above-described individual configurations, functions, and the like may also be realized by allowing a processor to interpret and execute programs that realize the respective functions.

Description of Reference Characters

1: Hydraulic excavator
1A: Front work implement (work device)
1B: Upper swing structure
1C: Lower track structure
2: Operation device
3: Track device
3a: Track motor
4: Swing device
5: Boom cylinder
6: Arm cylinder
7: Bucket cylinder
8: Boom
9: Arm
10: Bucket
11: Swing motor
12: Cabin

13: Bucket link
20a, 20b, 20c: Angle and angular velocity sensor
22: Controller
23: Display device
25a, 25b, 25c: Pressure sensor
61a, 61b, 61c: Overload sensor
201, 201A: Assistance section
202: Operation flow rate computing section
203: Stop state computing section
301: Upward direction specifying section
302: Claw tip position computing section
303: All overload-time operable direction computing section
304: To-be-modified actuator computing section
305: Overload-time operable direction computing section
306, 306A: Operating direction determining section
307, 307A: Command flow rate computing section
701: Time-norm relation recording section

**Claims**

1. A work machine comprising:

   a work device including a plurality of construction elements;
   a plurality of actuators that respectively drive the plurality of construction elements of the work device;
   overload sensors that sense overload states of the plurality of actuators, respectively;
   angle and velocity sensors that sense operation angles and angular velocities of the plurality of construction elements of the work device, respectively;
   operation devices that operate the actuators; and
   a controller that controls supply amounts of hydraulic fluid to be supplied to the actuators, depending on operating amounts of the operation devices,
   wherein the controller

   judges, based on sensing results of the overload sensors, whether there are overload states on the plurality of actuators, and based on sensing results of the angle and angular velocity sensors, whether there are stop states on the plurality of actuators, and,
   when among the actuators, any actuator in the overload state and stop state is judged, corrects the supply amount of the hydraulic fluid to be supplied to the actuator selected based on a result of the judgement.

2. The work machine according to claim 1,

   wherein the controller is configured to
   correct the supply amount of the hydraulic fluid to be supplied to each actuator different from the actuator or actuators in the overload state and the stop state, when among the plurality of actuators, one or some of the actuators are judged to be in the overload state and the stop state.

3. The work machine according to claim 1,

   wherein the controller is configured to
   correct the supply amounts of the hydraulic fluid to be supplied to all the actuators, when among the plurality of actuators, all the actuators are judged to be in the overload state and the stop state.

4. The work machine according to claim 2 or 3,

   wherein the controller is configured to
   correct the supply amount of the hydraulic fluid to be supplied to the actuator if a time of the overload state and the stop state is shorter than a time set beforehand, when any actuator in the overload state and the stop state is judged to exist.

**5.** The work machine according to claim 1,

wherein a velocity vector of a tip of the work device after the supply amount of the hydraulic fluid to be supplied to the actuator has been corrected by the controller is in a direction closer to being perpendicular to a direction vector along which the tip of the work machine operates by the actuator in the overload state and the stop state.

**6.** The work machine according to claim 1,

wherein the controller is configured to
correct the supply amount of the hydraulic fluid that is to be supplied to the actuator, such that the magnitude of a velocity vector of a tip of the work device after the correction of the supply amount of the hydraulic fluid to be supplied to the actuator will increase depending on an elapsed time from a time when the actuator has been brought into the overload state and the stop state.

EP 4 567 204 A1

[FIG. 1]

13

## [FIG. 2]

## [FIG. 3]

OPERATION FLOW RATE COMPUTING SECTION — 202

OPERATION FLOW RATES

ANGLE AND ANGULAR VELOCITY SENSORS — 20

ANGLES

UPWARD DIRECTION SPECIFYING SECTION — 301

CLAW TIP POSITION COMPUTING SECTION — 302

ALL OVERLOAD-TIME OPERABLE DIRECTION COMPUTING SECTION — 303

OVERLOAD-TIME OPERABLE DIRECTION COMPUTING SECTION — 305

OPERATGING DIRECTION DETERMINING SECTION — 306

COMMAND FLOW RATE COMPUTING SECTION — 307

ACTUATORS — 5,6,7

STOP STATE COMPUTING SECTION — 203

STOP STATES

OVERLOAD SENSORS — 61

OVERLOAD STATES

TO-BE-MODIFED ACTUATOR COMPUTING SECTION — 304

201

EP 4 567 204 A1

[FIG. 4]

START

COMPUTE EVERY ACTUATOR SATISFYING CONDITIONS FOR "OVERLOAD STATE" AND "STOP STATE" (CONDITIONS A) —S100

S110 — ARE THERE ACTUATORS CORRESPONDING TO CONDITIONS A ABSENT?

NO

S120 — HAVE CONDITIONS A BEEN SATISFIED FOR PREDETERMINED TIME OR LONGER?

NO

S130 — DO ALL ACTUATORS SATISFY CONDITIONS A?

NO

YES

S111 — DO NOT CORRECT

YES

S121 — DO NOT CORRECT, AND DISPLAY ON DISPLAY DEVICE

YES

S131 — CORRECT FOR ALL ACTUATORS

S140 — CORRECT FOR EACH ACTUATOR NOT SATISFYING CONDITIONS A

END

# [FIG. 5]

[FIG. 6]

IN CASE WHERE BOOM SATISFIES CONDITIONS

⟹ :OPERATING DIRECTION OF CLAW TIP BY ACTUATOR

⟹ :DIRECTION CLOSEST TO BEING PERPENDICULAR (SOLUTION 1)

⟹ :DIRECTION CLOSEST TO BEING PERPENDICULAR (SOLUTION 2)

[FIG. 7]

IN CASE WHERE BOOM SATISFIES CONDITIONS

▷ :DIRECTION VELOCIY VECTOR OF CLAW TIP
BY ARM AND BUCKET

[FIG. 8]

IN CASE WHERE BOOM SATISFIES CONDITIONS

▨▨▷ :DIRECTION CLOSEST TO BEING PERPENDICULAR (SOLUTION 1)

▨▨▷ :DIRECTION VELOCIY VECTOR OF CLAW TIP
BY ARM AND BUCKET

AM

BM

BK

FORMABLE ANGLE

# [FIG. 9]

IN CASE WHERE BOOM AND ARM SATISFY CONDITIONS

⟹ :OPERATING DIRECTION OF CLAW TIP BY ACTUATOR

# [FIG. 10]

## IN CASE WHERE BOOM AND ARM SATISFY CONDITIONS

▭▭⟹ :OPERATING DIRECTION OF CLAW TIP BY ACTUATOR

▱▱⟹ :OPERABLE DIRECTION (1) OF BUCKET

▦▦⟹ :OPERABLE DIRECTION (2) OF BUCKET

## [FIG. 11]

IN CASE WHERE BOOM AND ARM SATISFY CONDITIONS

⟹ :OPERATING DIRECTION OF CLAW TIP BY ACTUATOR

⟹ :OPERABLE DIRECTION (1) OF BUCKET

⟹ :OPERABLE DIRECTION (2) OF BUCKET

AM

BM

FORMABLE ANGLE $\theta_{BM1}$  $\nu_{BM}$  BK

FORMABLE ANGLE $\theta_{AM1}$

$\nu_{AM}$

[FIG. 12]

IN CASE WHERE BOOM AND ARM SATISFY CONDITIONS

⟹ :OPERATING DIRECTION OF CLAW TIP BY ACTUATOR

⟹ :OPERABLE DIRECTION (1) OF BUCKET

⟹ :OPERABLE DIRECTION (2) OF BUCKET

## [FIG. 13]

EP 4 567 204 A1

[FIG. 14]

IN CASE OF ARM
  RELATION BETWEEN TIME AND NORM

[FIG. 15]

IN CASE OF ARM

# EP 4 567 204 A1

## INTERNATIONAL SEARCH REPORT

| | International application No. |
|---|---|
| | **PCT/JP2023/045569** |

### A. CLASSIFICATION OF SUBJECT MATTER

*E02F 9/22*(2006.01)i; *E02F 9/20*(2006.01)i
FI:  E02F9/22 E; E02F9/20 Q

According to International Patent Classification (IPC) or to both national classification and IPC

### B. FIELDS SEARCHED

Minimum documentation searched (classification system followed by classification symbols)

E02F9/22; E02F9/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-160278 A (KOBELCO CONSTRUCTION MACHINERY CO., LTD.) 19 October 2022 (2022-10-19)<br>entire text, all drawings | 1-6 |
| A | JP 2018-044305 A (HITACHI CONSTRUCTION MACHINERY CO., LTD.) 22 March 2018 (2018-03-22)<br>entire text, all drawings | 1-6 |
| A | JP 61-146929 A (KUBOTA TEKKO K.K.) 04 July 1986 (1986-07-04)<br>entire text, all drawings | 1-6 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/045569**

| Patent document cited in search report | | | Publication date (day/month/year) | Patent family member(s) | Publication date (day/month/year) |
|---|---|---|---|---|---|
| JP | 2022-160278 | A | 19 October 2022 | (Family: none) | |
| JP | 2018-044305 | A | 22 March 2018 | (Family: none) | |
| JP | 61-146929 | A | 04 July 1986 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011252338 A

- JP S61146929 A